# EUROPEAN PATENT APPLICATION

(11) **EP 2 840 501 A1**
(43) Date of publication of application: **25.02.2015**
(21) Application number: 12874914.0
(22) Date of filing: 18.04.2012
(51) Int. Cl.: G06F 12/00, G06F 17/30

(54) **DATABASE MANAGEMENT METHOD, DATABASE SYSTEM AND PROGRAM**

(71) Applicant: Murakumo Corporation, Tokyo 153-0061 (JP)
(72) Inventor: YAMADA, Hiroyuki, Tokyo 153-0061 (JP)
(74) Representative: Chettle, Adrian John
(86) International application number: PCT/JP2012/060496
(87) International publication number: WO 2013/157099

(57) **Abstract**

To realize a database management method capable of hierarchically constructing master nodes and updating the master nodes efficiently. From a lower-level master node to a higher-level master node, a shadow copy expanded in its own memory, a heap tuple map, and a shadow index are sent as a write set, and the higher-level master node, upon reception of the write set, verifies whether an update has already been executed and sends a record of this update as a transaction log to the lower-level master node, enabling efficient database updating without a discrepancy, from the lower-level master node to the higher-level master node, as well as from the higher-level master node to the subordinate lower-level master node.

## Description

### [Technical Field]

The present invention relates to a database management method, and in particular relates to a method of managing a database in which a plurality of master nodes are hierarchically connected by a network.

### [Background Art]

The present applicant took particular note of the technology of managing a database using a transaction log, and proposed a data synchronization method based on a one-to-one master/slave system in Japanese Patent Application Publication No. 2006-293910. The present applicant subsequently proposed a data synchronization method based on a one-to-N (N is a positive integer) master/slave system in WO 2010/106991.

Here, a transaction log refers to data representing the history of changes made to the database. Such technology can realize high-speed operations while maintaining the permanence of changes by recording the transaction log in an area that is different from the recording area of the database.

Japanese Patent Application Publication No. 2006-293910 focused on realizing a replication system by using a transaction log. In WO 2010/106991, a slave node that received a search command from a client sends a request message to a master node, the slave node requests the master node to send a transaction log up to the latest version of the update of the master database when the slave node does not receive a return message from the master node within a predetermined time, the master node that received the foregoing request sends the requested transaction log to the slave node, and the slave node refers to the received log and updates its own replica database.

### [Prior Art Documents]

### [Patent Application Publication]

[Document 1] JP 2006-293910
[Document 2] WO 2010/106991

### [Summary of the Invention]

### [Problems to be Solved by the Invention]

Meanwhile, WO 2010/106991 was based on the premise of being a network configuration in which its node configuration comprises a plurality of mirror nodes to one master node.

Thus, each of the plurality of mirror nodes does not independently execute data update instructions (INSERT, UPDATE, DELETE), and only has to update its own database by referring to the transaction log from the master node.

Meanwhile, pursuant to the diversity and complexity of databases, a so-called multi master system comprising a plurality of master nodes is attracting attention. With respect to this point, in a network configuration where the master nodes have symmetric properties (when the master nodes are of a parallel structure), proposed is a theory of prioritizing the update information among the master nodes, and synchronizing the master nodes. However, the procedures for synchronizing all nodes are complex, and the solution during contention was not realistic.

The present inventor devised the present invention in light of the foregoing circumstances. Thus, the technical object of this invention is to realize a database management method capable of hierarchically building a plurality of master nodes and using such hierarchical structure to reliably and efficiently update the database and an index for searching the database of the plurality of master nodes.

### [Means for Solving the Problems]

A first aspect of the present invention is a method of managing a database which hierarchically includes higher-level and lower-level master nodes in which records can be updated, the higher-level and lower-level master nodes each having a database and an index for searching the database, the method including: when an update instruction for updating the database is issued in any of the lower-level master nodes, generating, by a database processing unit of the lower-level master node, a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node; comparing, by a database processing unit of the higher-level master node, the heap tuple map of the write set received from the lower-level master node with the database of the higher-level master node, and verifying whether a corresponding row of the database that is registered as a target has been updated by a different write set; aborting, by the database processing unit of the higher-level master node, the write set when the update has been performed, and when the update has not been performed, updating the database of the higher-level master node and the index of the database by using the shadow copy and the shadow index, and generating, by a transaction log processing unit of the higher-level master node, a record of this update as a transaction log; distributing, by the higher-level master node, the transaction log to the lower-level master nodes including the lower-level master node which has sent the write set; and updating, by a transaction log processing unit of the lower- level master node, the database of the lower-level master node and the index of the database based on the received transaction log.

A second aspect of the present invention is the method of managing a database according to the first aspect, wherein the shadow copy of the write set in the lower-level master node is configured only from newly added rows.

A third aspect of the present invention is the method of managing a database according to the first or second aspect, wherein the transaction log processing unit of the higher-level master node generates a transaction log that only shows the record of the update associated with the database, and the transaction log processing unit of the lower-level master node specifies updated contents of the index from the record of the update of the database that is shown by the received transaction log, and updates the index of the lower-level master node based on the specified updated contents.

A fourth aspect of the present invention is the method of managing a database according to any one of the first to third aspects, wherein, in a stage where the write set is being generated by the lower-level master node, when search processing is executed on the database of the lower-level master node, the method executes : referring, by the database processing unit of the lower-level master node, to the index of the database to extract a corresponding row of the database that is a target of the search processing; referring to the heap tuple map included in the write set, on a row-by-row basis, to determine whether a row number of the extracted corresponding row is entered or not, including the extracted corresponding row in a search result when the row number is not entered, and removing the extracted corresponding row from the search result when the row number is entered; and referring to the shadow index included in the write set, extracting an entry of a shadow copy as a target of the search processing, and including the extracted entry in the search result.

A fifth aspect of the present invention is the method of managing a database according to any one of the first to fourth aspects, wherein, when the write set is generated in the lower-level master node, an area of a backend memory in the lower-level master node for registering the write set can be referred to at least by the transaction log processing unit of the lower-level master node which executes an update instruction based on the transaction log distributed from the higher-level master node, and when the transaction log processing unit of the lower-level master node refers to the backend memory and a corresponding row to be updated based on the update instruction is contained in the heap tuple map of the write set, the transaction log processing unit aborts the transaction that is generating this heap tuple map.

A sixth aspect of the present invention is a method of managing a database of a higher-level master node in a database hierarchically including the higher-level master node and a lower-level master node in which records can be updated, the higher-level and lower-level master nodes each having a database and an index for searching the database, the method including: receiving a write set which is generated when an update instruction for updating the database is issued in any of the lower-level master nodes and which is generated by a database processing unit of the lower-level master node, the write set including shadow copy expanded in a memory of the lower-level master node and showing updated contents of the database resulted by the update instruction, a heap tuple map showing a row that is a target of the update instruction, and a shadow index showing contents to be added in the index when the database is updated; comparing, by a database processing unit of the higher-level master node, the heap tuple map of the write set received from the lower-level master node with the database of the higher-level master node, and verifying whether a corresponding row of the database that is registered as a target has been updated by a different write set; and aborting, by the database processing unit of the higher-level master node, the write set when the update has been performed, and when the update has not been performed, updating the database of the higher-level master node and the index of the database by using the shadow copy and the shadow index.

A seventh aspect of the present invention is the method of managing a database of a higher-level master node according to the sixth aspect, wherein the higher-level master node receives the write set that includes a shadow copy configured only from newly added rows.

An eighth aspect of the present invention is a method of managing a database of a lower-level master node in a database hierarchically including a higher-level master node and the lower-level master node in which records can be updated, the higher-level and lower-level master nodes each having a database and an index for searching the database, the method including: when an update instruction for updating the database is issued in any of the lower-level master nodes, generating, by a database processing unit of the lower-level master node, a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node in order to cause the higher-level master node to compare the heap tuple map of the write set received from the lower-level master node with the database of the higher-level master node, verify whether a corresponding row of the database that is registered as a target has been updated by a different write set, abort the write set when the update has been performed, and when the update has not been performed, update the database of the higher-level master node and the index of the database by using the shadow copy and the shadow index, generate a record of this update as a transaction log, and distribute the transaction log to the lower-level master nodes including the lower-level master node which has sent the write set; and updating, by a transaction log processing unit of the lower-level master node upon reception of the transaction log, the database of the lower-level master node and the index of the database based on the received transaction log.

A ninth aspect of the present invention is the method of managing a database of a lower-level master node according to the eighth aspect, wherein the shadow copy of the write set in the lower-level master node is configured only from newly added rows.

A tenth aspect of the present invention is the method of managing a database of a lower-level master node according to the eighth or ninth aspect, wherein a transaction log that only shows the record of the update associated with the database is generated in the higher-level master node, and the transaction log processing unit of the lower-level master node specifies updated contents of the index from the record of the update of the database that is shown by the received transaction log, and updates the index of the lower-level master node based on the specified updated contents.

An eleventh aspect of the present invention is the method of managing a database of a lower-level master node according to any one of the eighth to tenth aspects, wherein, in a stage where the write set is being generated by the lower-level master node, when search processing is executed on the database of the lower-level master node, the method executes: referring, by the database processing unit of the lower-level master node, to the index of the database to extract a corresponding row of the database that is a target of the search processing; referring to the heap tuple map included in the write set, on a row-by-row basis, to determine whether a row number of the extracted corresponding row is entered or not, including the extracted corresponding row in a search result when the row number is not entered, and removing the extracted corresponding row from the search result when the row number is entered; and referring to the shadow index included in the write set, extracting an entry of a shadow copy as a target of the search processing, and including the extracted entry in the search result.

A twelfth aspect of the present invention is the method of managing a database of a lower-level master node according to any one of the eighth to eleventh aspects, wherein, when the write set is generated in the lower-level master node, an area of a backend memory in the lower-level master node for registering the write set can be referred to at least by the transaction log processing unit of the lower-level master node which executes an update instruction based on the transaction log distributed from the higher-level master node, and when the transaction log processing unit of the lower-level master node refers to the backend memory and a corresponding row to be updated based on the update instruction is contained in the heap tuple map of the write set, the transaction log processing unit aborts the transaction that is generating this heap tuple map.

Note that another aspect of the method of managing a database according to each of these aspects may be a database system or program that realizes each of the foregoing configurations, or may be a storage medium recording such program which can be read by a computer or other devices and machines. Such a recording medium that can be read by a computer and the like is a medium for storing the information of the program and the like electrically, magnetically, optically, mechanically, or chemically. Note that the database system may be realized by one or more computers.

For example, a thirteenth aspect of the present invention is a database system which hierarchically includes higher-level and lower-level master nodes in which records can be updated, the higher-level and lower-level master nodes each having a database and an index for searching the database, the database system including: means for, when an update instruction for updating the database is issued in any of the lower-level master nodes, generating in the lower-level master node where the update instruction is generated a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node; means for, in the higher-level master node, comparing the heap tuple map of the write set received from the lower-level master node with the database of the higher-level master node and verifying whether a corresponding row of the database that is registered as a target has been updated by a different write set; means for, in the higher-level master node, aborting the write set when the update has been performed, and when the update has not been performed, updating the database of the higher-level master node and the index of the database by using the shadow copy and the shadow index, and generating a record of this update as a transaction log; means for, in the higher-level master node, distributing the transaction log to the lower-level master nodes including the lower-level master node which has sent the write set; and means for, in the lower-level master node, updating the database of the lower-level master node and the index of the database based on the received transaction log.

For example, a fourteenth aspect of the present invention is a program for causing a higher-level master node of a database hierarchically including the higher-level master node and a lower-level master node which each have a database and an index for searching the database and in which records can be updated, to execute the steps of: receiving a write set which is generated when an update instruction for updating the database is issued in any of the lower-level master nodes and which is generated by a database processing unit of the lower-level master node, the write set including shadow copy expanded in a memory of the lower-level master node and showing updated contents of the database resulted by the update instruction, a heap tuple map showing a row that is a target of the update instruction, and a shadow index showing contents to be added in the index when the database is updated; comparing the heap tuple map of the write set received from the lower-level master node with the database of the higher-level master node, and verifying whether a corresponding row of the database that is registered as a target has been updated by a different write set; and aborting the write set when the update has been performed, and when the update has not been performed, updating the database of the higher-level master node and the index of the database by using the shadow copy and the shadow index.

For example, a fifteenth aspect of the present invention is a program for causing a lower-level master node of a database hierarchically including a higher-level master node and the lower-level master node which each have a database and an index for searching the database and in which records can be updated, to execute the steps of: when an update instruction for updating the database is issued in any of the lower-level master nodes, generating a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node in order to cause the higher-level master node to compare the heap tuple map of the write set received from the lower-level master node with the database of the higher-level master node, verify whether a corresponding row of the database that is registered as a target has been updated by a different write set, abort the write set when the update has been performed, and when the update has not been performed, update the database of the higher-level master node and the index of the database by using the shadow copy and the shadow index, generate a record of this update as a transaction log, and distribute the transaction log to the lower-level master nodes including the lower-level master node which has sent the write set; and updating, upon reception of the transaction log, the database of the lower-level master node and the index of the database based on the received transaction log.

### [Effects of the Invention]

According to the present invention, in the multi master environment in which the master nodes are built hierarchically, a lower-level master node sends, to a higher-level master node, a write set that includes a shadow copy expanded in its own memory, heap tuple map, and shadow index. Upon reception of the write set, the higher-level master node verifies whether or not a corresponding row has been updated by a different write set. When the update has not been performed, the higher-level master node executes an update process on the database and index by using the shadow copy, heap tuple map, and shadow index. Moreover, according to the present invention, a record of this update is sent as a transaction log to the lower-level master node, enabling efficient database updating without discrepancy, from the lower-level master node to the higher-level master node, as well as from the higher-level master node to the subordinate lower-level master node.

### [Brief Description of the Drawings]

FIG. 1 illustrates the database structure of hierarchical master nodes according to an embodiment;
FIG. 2 illustrates a functional block of a master node according to an embodiment;
FIG. 3 illustrates the master node according to an embodiment;
FIG. 4 illustrates the relationship between a page of the database of a lower-level master node according to an embodiment and a generated write set (heap tuple map (HTM), shadow copy (SC), and shadow index (SI));
FIG. 5 illustrates a process for comparing the heap tuple map (HTM) included in a write set sent from the lower-level master node, with a master database of a higher-level master node according to an embodiment;
FIG. 6 illustrates a process for comparing the heap tuple map (HTM) included in the write set sent from the lower-level master node, with the master database of the higher-level master node according to an embodiment;
FIG. 7 illustrates a process according to an embodiment for updating the database of the higher-level master node by using the shadow copy (SC) of the write set sent from the lower-level master node;
FIG. 8 illustrates a process according to an embodiment for updating the index of the higher-level master node by using the shadow index (SI) of the write set sent from the lower-level master node;
FIG. 9 illustrates a transaction log generated by the higher-level master node in an embodiment; and
FIG. 10 illustrates the case where a search is executed on the database of the lower-level master node at the stage where the write set is being generated by the lower-level master node.

### [Modes for Carrying Out the Invention]

Embodiments according to the aspects of the present invention (also referred to as "this embodiment," hereinafter) are described hereinafter with reference to the drawings. However, the embodiments described below are merely illustrative of the present invention in its broader aspects and is not to limit the scope of the present invention. It is to be noted, therefore, that various improvements and modifications can be made to the present invention without departing from the scope thereof. The specific configuration corresponding to each of the embodiments may appropriately be employed to implement the present invention.

The data appearing in this embodiment are described in a natural language but are more specifically specified in a pseudo-language, commands, parameters, machine languages and the like that can be recognized by a computer.

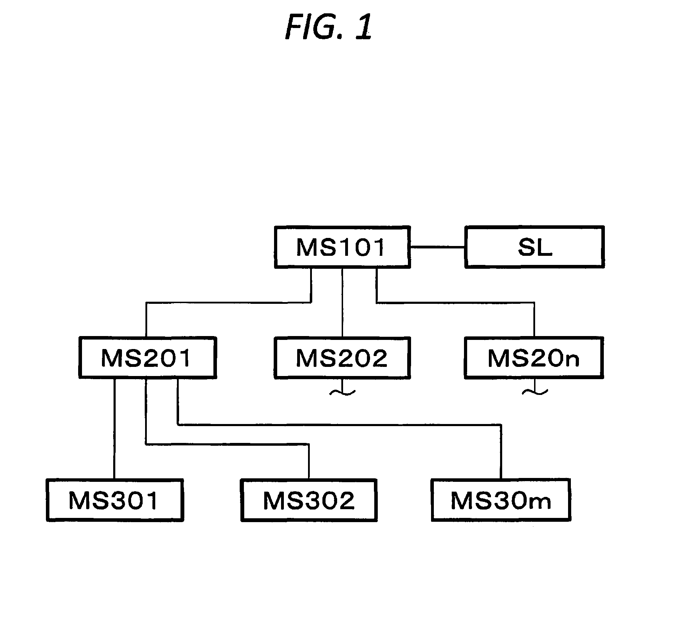

FIG. 1 illustrates the structure of hierarchical master nodes according to this embodiment. As shown in the diagram, the node configuration has lower-level master nodes (MS201, MS202, ..., MS20n and MS301, MS302, ..., MS30m) that are hierarchically provided below a higher-level master node (MS101). Each master node (information processing apparatus) includes a database and an index for searching the database. Moreover, the higher-level master node (MS101) includes a slave (SL), and the other master nodes may also include the slaves. The update management technology described in PCT/JP2010/054311 (prior application of WO 2010/106991 by the present applicant) may be applied in order to update the databases between a master node and a slave in this kind of master/slave configuration. Note that "n" is a natural number of 1 or higher, and "m" a natural number of 0 or higher. The number of master nodes under control of each of the master nodes (MS201, MS202, ..., MS20n) may vary. The master nodes (MS201, MS202, ..., MS20n) that exist between the higher-level master node (MS101) and the lower-level master nodes (MS301, MS302, ... , MS30m, etc.) may be called "middle-level master nodes."

While foregoing WO 2010/106991 only needs to copy (replicate) the transaction log of the master node to the lower-level nodes, this embodiment is unique in that attention was focused on the fact that, with a configuration of hierarchical multi master nodes, when an update instruction is also being executed in the lower-level master nodes, the consistency of all lower-level master nodes cannot be maintained only by referring to the transaction log from the higher-level master node. This is explained below.

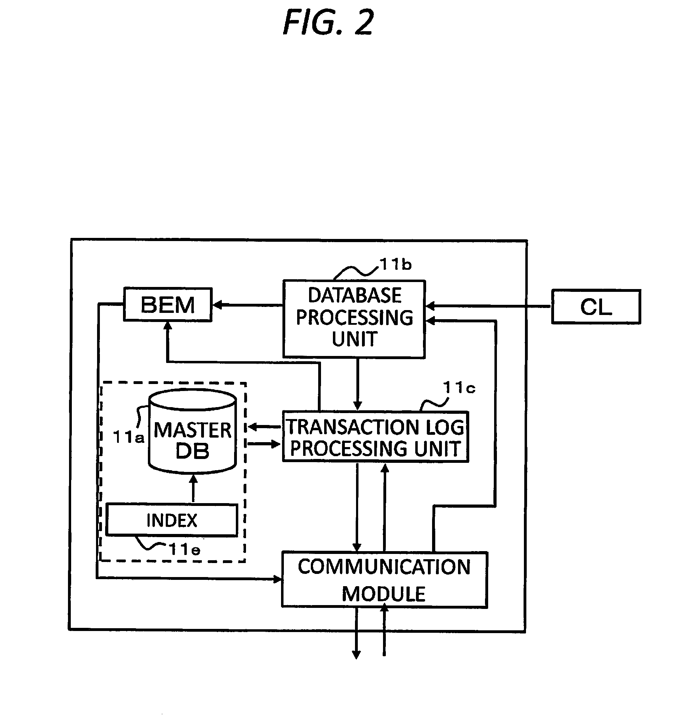

FIG. 2 illustrates a functional block of the higher-level master node (MS101). The lower-level master nodes (MS201, MS202, ..., MS20n and MS301, MS302, ..., MS30m) have the same configuration as the higher-level master node (MS101).

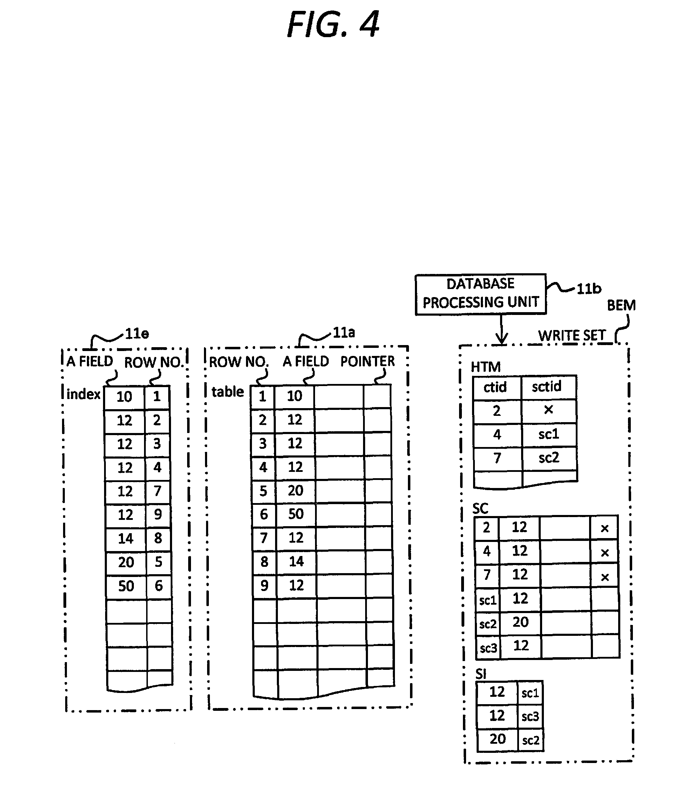

As shown in FIG. 2, when an update instruction for updating the database is input from a client (CL), a database processing unit (11b) generates a write set in a backend memory (BEM) created in a main memory (MM). This write set includes, as shown in FIG. 4, a shadow copy (SC) representing the updated contents of the database which are resulted by the update instruction, a heap tuple map (HTM) representing a row that is a target of the update instruction, and a shadow index (SI) representing the contents to be added in an index when the database is updated.

The database processing unit 11b, referring to the master database (11a) and index (11e), sends the write set, which was generated in the backend memory (BEM), to the higher-level master node via a communication module (11d) without directly writing data into a master database (11a) and index (11e).

This kind of processing is performed in the higher-level master node (MS101), as well as in the lower-level master nodes (MS201, MS202, ..., MS20n and MS301, MS302, ..., MS30m).

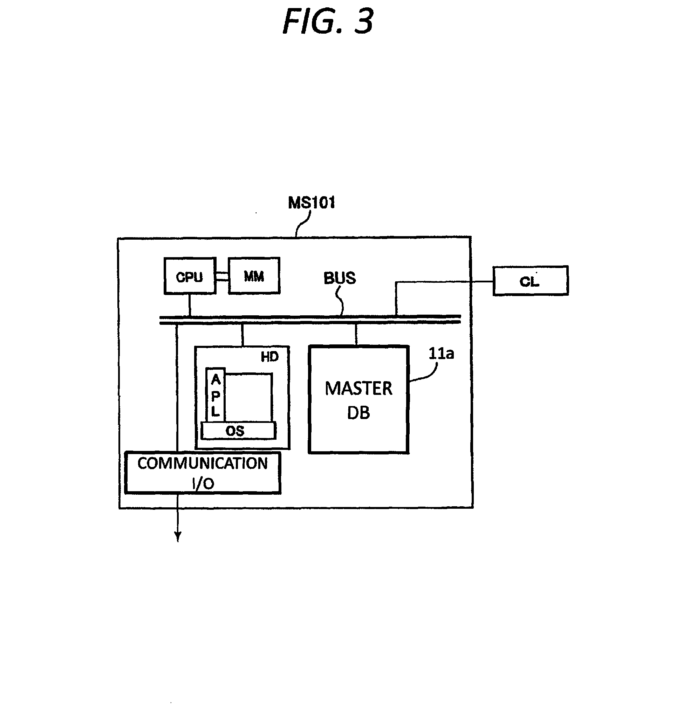

FIG. 3 illustrates the hardware configuration for realizing the foregoing functions. The higher-level master node (MS101) is, for example, a general purpose information processing apparatus, and includes a large-scale hard drive (HD), a master database (11a), and a communication interface (I/O) for communicating with the outside which are connected via a BUS around a central processing unit (CPU) and a main memory (MM). Note that a client terminal (CL) is connected via the BUS or the communication interface (I/O) for receiving instructions. Note that the master database (11a) may be configured on the large-scale hard drive (HD), or configured on the main memory (MM). In other words, there is no limitation in where the master database (11a) may be configured. The index (11e) may be held in the main memory (MM) or stored in the large-scale hard drive (HD).

The large-scale hard drive (HD) stores an operating system (OS) as well as application programs (APL), and the functions as the foregoing master node are realized by the central processing unit (CPU) reading and sequentially executing the programs via the BUS and the main memory (MM). Note that, the lower-level master nodes (MS201, MS202, ..., MS20n and MS301, MS302, ..., MS30m) are also configured the same.

Next, the processing performed by the database processing unit (11b) is described in detail with reference to FIG. 4. FIG. 4 illustrates the relationship between the master database (11a) and index (11e) of the lower-level master node (MS201) and the write set. FIG. 4 also illustrates the case where the tuple corresponding to row number 2 is deleted (DELETE), the tuple corresponding to row number 4 is rewritten into a new instruction (UPDATE to sc1) without changing the corresponding value shown in the A field, the tuple corresponding to row number 7 is rewritten to a new instruction (UPDATE to sc2) after changing the corresponding value shown in the A field, and a new tuple is added (INSERT to sc3).

The master database (11a) includes row numbers, instructions having the A field that is given values, and pointers, and is a recordable database in which a tuple is added each time a new instruction is given from the client terminal (CL). In FIG. 4, the master database (11a) is expressed in the form of a table in which a single piece of row data corresponds to a single tuple.

The index (11e) is the data used for improving the efficiency of access to the tuples included in the master database (11a). In FIG. 4, the entries in the index (lie) include values of the A field and row numbers corresponding to target tuples and are arranged in ascending order of the values shown in the A field. Note that the index (11e) is expressed in the form of a list in FIG. 4. However, the data structure of the index (11e) may be, for example, a "B-tree" (or a B+ tree or a B*tree), a hash table or the like and selected as appropriate in each of the embodiments.

The index (11e) according to this embodiment shows an index for the values shown in the A field. However, the A field merely shows the instructions for the tuples; thus, the index (11e) may be an index associated with any of the contents of the tuples included in the master database (11a). This embodiment is not limited by the instructions for the tuples targeted by the index (11e).

In the lower-level master node (MS201), when this kind of update instruction is given to the master database based on instructions from the client terminal (CL), as described above, a write set including a heap tuple map (HTM, heap file), a shadow copy (SC) and a shadow index (SI) is generated in the backend memory (BEM).

The original row number (ctid) and a new row number (sctid) are associated and registered in the heap tuple map (HTM) . The heap tuple map (HTM) is additionally generated each time the database is updated. Note that, since the row numbers corresponding to the tuples to which the instructions of row numbers 4 and 7 are to be written are still unknown at this stage, provisional row numbers (sc1 and sc2) are written in sctid.

The updated contents of the master database (11a) are registered in the shadow copy (SC). Specifically, the contents of the tuples to be rewritten are registered in the shadow copy (SC). Since the tuple row numbers to be newly added to the master database (11a) are still unknown at this stage, provisional row numbers (sc1, sc2, and sc3) are written to the entries that show the contents of the tuples to be added.

Note that, at this stage, the database processing unit (11b) of the lower-level master node (MS201) can recognize that the tuple corresponding to row number 2 to which the DELETE instruction is applied and the tuples corresponding to row numbers 4 and 7, which are the update source tuples to which the UPDATE instructions are applied, will be deleted by the generated heap tuple map (HTM). Therefore, the entries for the tuples corresponding to row numbers 2, 4 and 7 do not have to be written in the shadow copy (SC). In other words, the shadow copy (SC) may be configured only from the entries associated with the rows to be newly added (sc1, sc2, and sc3).

Furthermore, the updated contents of the index (11e) are registered in the shadow index (SI). Specifically, the contents of the entries to be added are registered in the shadow index (SI). Note that, since the tuple row numbers to be newly added to the master database (11a) are still unknown at this stage, provisional row numbers (sc1, sc2, and sc3) are written to the corresponding entries.

The write set generated as described above is sent from the lower-level master node (MS201) to the higher-level master node (MS101). Note that the write set may be sent to the higher-level master node (MS101) according to the hierarchical structure, or may be sent to the higher-level master node (MS101) without according to the hierarchical structure. For instance, when a write set is generated by the MS301, this write set may be sent to the MS101 via the MS201 or directly from the MS301.

In the higher-level master node (MS101), when the database processing unit 11b (central processing unit (CPU)) receives the write set from the lower-level master node (MS201), it activates the transaction log processing unit (11c) pursuant to the update instruction and starts the generation of transaction log. In addition, the database processing unit 11b reads the heap tuple map (HTM) from the received write set, and compares it with its own master database (11a).

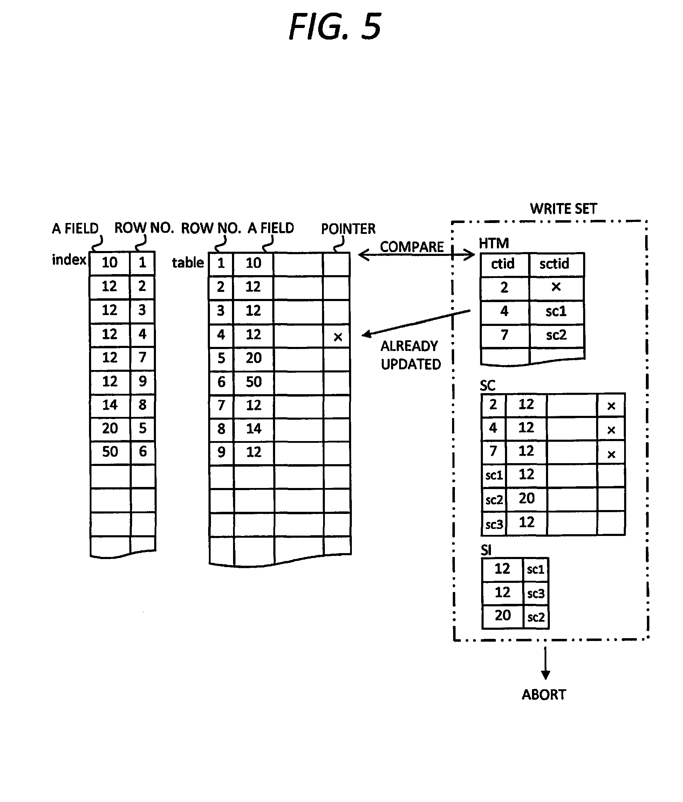

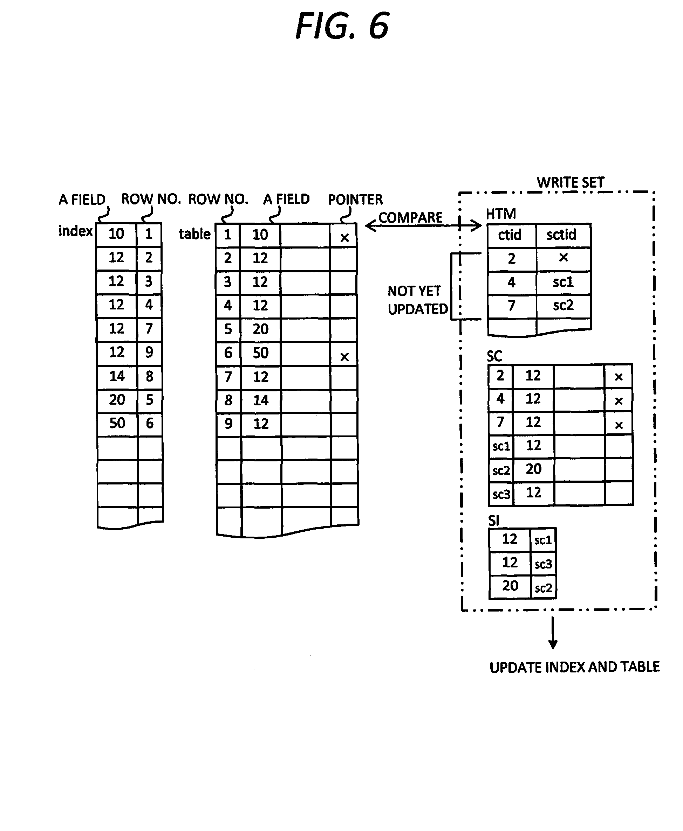

FIGS. 5 and 6 each illustrate the comparison process. The database processing unit (11b) of the higher-level master node (MS101) verifies whether or not the contents of the target tuples (the tuples corresponding to row numbers 2, 4 and 7 in this case) have been updated in the master database (11a).

In the case shown in Fig. 5, the tuple corresponding to row number 4 has already been updated (deleted) by a different write set, and a deletion pointer is given to the target tuple (the tuple corresponding to row number 4). At this moment, the processing by this write set is stopped, and the write set is aborted.

On the other hand, in the case illustrated in FIG. 6, the tuples corresponding to row numbers 1 and 6 have already been updated (deleted) by the different write set, but the target tuples (the tuples corresponding to row numbers 2, 4 and 7) have not yet been updated. In this case, the database processing unit (11b) updates its master database (11a) and index (11e) by using the shadow copy (SC) and shadow index (SI) included in the write set.

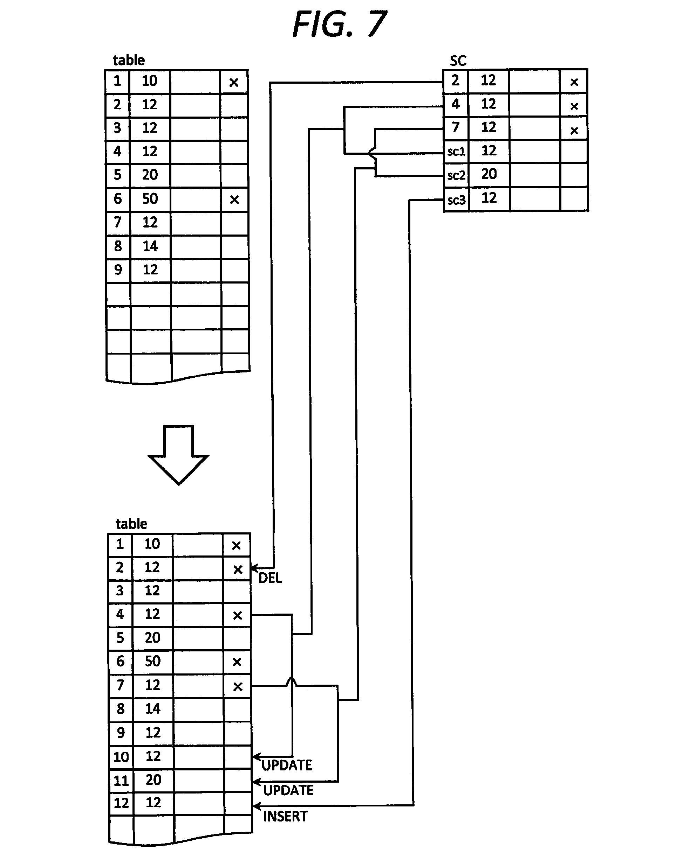

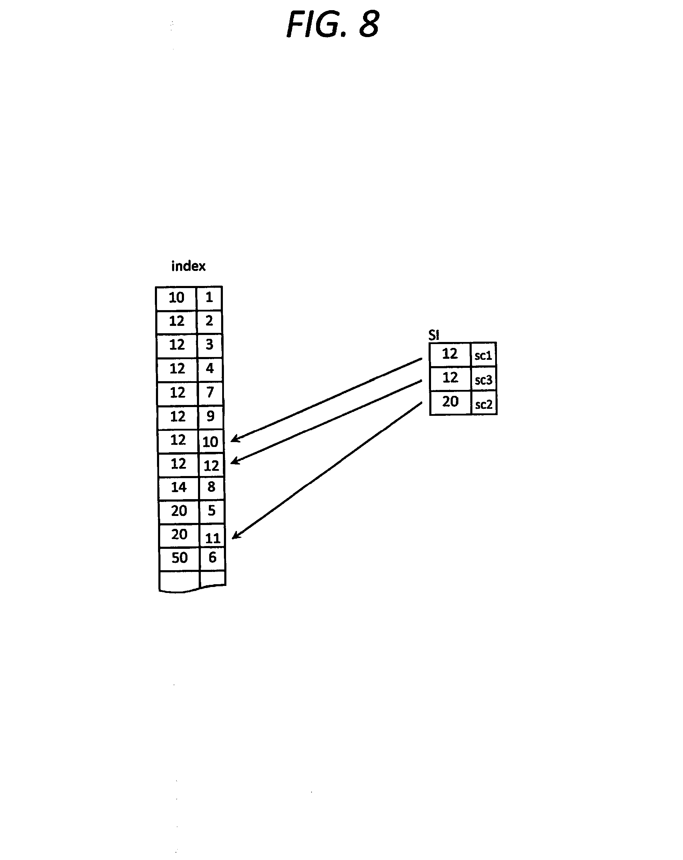

FIGS. 7 and 8 each illustrate the update processing. FIG. 7 shows the process for updating the master database (11a) by using the shadow copy (SC) included in the write set. FIG. 8 illustrates the process for updating the index (11e) using the shadow index (SI) included in the write set.

When the write set shown in FIGS. 4 and the like is received, the database processing unit (11b) of the higher-level master node (MS101) gives a deletion pointer to the tuple corresponding to row number 2, which is the target of the DELETE instruction, in its master database (11a). The database processing unit (11b) also gives a deletion pointer to the update source tuples (the tuples corresponding to row numbers 4 and 7), which are the targets of the UPDATE instruction, and writes the instructions for new tuples (tuples associated with sc1 and sc2) as the updated tuples to the tuples corresponding to row numbers 10 and 11. The database processing unit (11b) further writes the instructions for the tuples (tuples associated with sc3) associated with the INSERT instruction to the tuple corresponding to row number 12.

Note that the shadow copy (SC) is sometimes configured only from the entries associated with the rows to be newly added (sc1, sc2, and sc3). In this case, the database processing unit (11b) specifies, from the heap tuple map (HTM), a tuple to which the deletion pointer is to be added.

Also, as shown in FIG. 8, the database processing unit (11b) updates the index (lie) by using the shadow index (SI) included in the received write set. Specifically, the database processing unit (11b) refers to the values shown in the A field that correspond to the entries in the shadow index (SI), and adds these entries to appropriate sections in the index (11e). In case of FIG. 8, the entries of the index (11e) are arranged in accordance with the values shown in the A field. Therefore, the database processing unit (11b) adds the entries associated with sc1 and sc3 to the sections in the index (11e) where the corresponding values in the A field are 12. The database processing unit (11b) also adds the entry associated with sc2 to the section in the index (11e) where the value in the A field is 20. In so doing, the row numbers shown by the entries are not the provisional row numbers (sc1, sc2, and sc3) but are rewritten to the actual row numbers (10, 11, and 12).

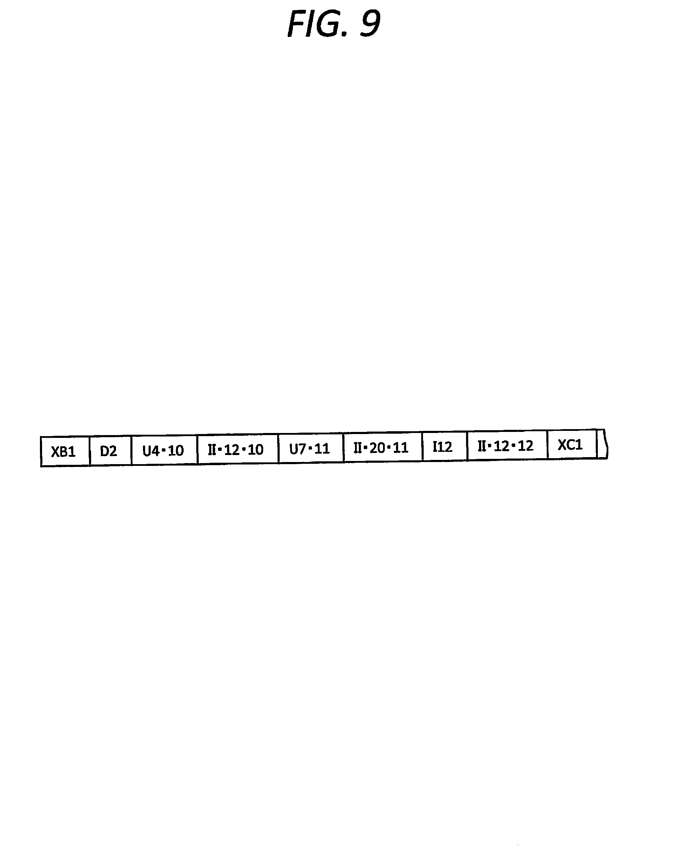

FIG. 9 shows an example of the transaction log that is generated by the transaction log processing unit (11c) when the master database (11a) of the higher-level master node (MS101) is updated as described above. This transaction log is a file in which at least the instruction and transaction (row number and the processing executed thereto) are sequentially recorded in a time series.

As shown in Fig. 9, subsequent to the instruction (XB1) for starting the transaction, a log in which the instruction number and the row number form a pair is generated sequentially in the transaction log processing unit (11c). For example, a log (D2) in which row number 2 is deleted as the DELETE instruction is generated first. Next, a log (U4•10) in which the tuple corresponding to row number 4 is deleted as the UPDATE instruction and a tuple corresponding to row number 10 is added is generated. Then, a log (II•12•10) in which the entry corresponding to row number 10 and A field value 12 is added to the index (11e) in response to the addition of the tuple is generated. Furthermore, a log (U7•11) in which the tuple corresponding to row number 7 is deleted and the tuple corresponding to row number 11 is added as the UPDATE instruction is generated, and a log (II**•**20**•**11) in which the entry corresponding to row number 11 and A field value 20 is added to the index (11e) in response to the addition of the tuple is generated. Subsequently, a log (I12) in which the tuple corresponding to row number 12 is added as the INSERT instruction is generated, and a log (II•12•12) in which the entry corresponding to row number 12 and A field value 12 is added to the index (lie) in response to the addition of the tuple is generated. Finally, a commitment instruction (XC1) thereof is issued.

This transaction log is distributed from the communication module (11d) to the lower-level master node (MS201) which has sent the write set, as well as to all lower-level master nodes (MS202, ..., MS20n and MS301, MS302, ..., MS30m). The lower-level master nodes that received the transaction log copy (replicate) such transaction log in their own database.

Specifically, when a lower-level master node (M202, for instance) receives the transaction log illustrated in FIG. 9 with the communication module (11d), it activates the transaction log processing unit (11c) and replicates the transaction log in its own master database (11a). As a result, in the master database (11a) of the lower-level master node, deletion pointers are given to the tuples corresponding to row numbers 2, 4 and 7 and new tuples corresponding to row numbers 10 to 12 are added. Moreover, the entries associated with the new tuples of row numbers 10 to 12 that are added in the master database (11a) are added in the index (11e) of the lower-level master node.

Accordingly, in the lower-level master nodes, the databases are uniformly managed by replicating the transaction log sent from the higher-level master node.

Note that the transaction log processing unit (11c) of the lower-level master node can specify the contents of the entries to be added to the index (11e), from the logs indicating that tuples are added to the master database (11a) (logs U4•10, U7•11, II**•**12**•**12 in the foregoing example). Thus, the transaction log processing unit (11c) of the higher-level master node (MS101) may create a transaction log excluding the logs associated with updates of the index (11e). In other words, the transaction log processing unit (11c) of the higher-level master node (MS101) may generate a transaction log that only shows the records of updates associated with the master database (11a). In so doing, the transaction log processing unit (11c) of the lower-level master node may specify the updated contents of the index from the received records of updates of the database shown by the transaction log processing unit, and update its own index (11e) based on the specified updated contents.

The present invention was explained above based on an embodiment, but the present invention is not limited thereto. Modified examples of the present invention are explained below.

### <Case where the database is updated in the higher-level master node MS101>

With respect to the processing in a case where an update instruction of a master database is issued in a lower-level master node (MS201, for instance), as explained in FIG. 2, a write set including a heap tuple map (HTM, heap file), a shadow copy (SC) and a shadow index (SI) is generated in a backend memory (BEM). However, when an update instruction of a master database is issued in a higher-level master node (MS101), a write set is not generated since it is not necessary to notify a higher-level node. That is, in such a case, with the higher-level node (MS101), as shown in the left diagram of FIGS. 7 and 8, update data are directly written into the master database (11a) and the index (11e), and the transaction log shown in FIG. 9 is generated. This transaction log is distributed to the lower-level master nodes, and the lower-level master nodes that received the transaction log replicate such transaction log in their own master database.

### <When search processing is executed at the stage where the lower-level master node is generating a write set>

In the lower-level master node (MS201, for example), when a search is executed to the master database of that lower-level master node at the stage when a write set is being generated as shown in FIG. 4, there will be no problem if the search is targeting a row number other than the row number in which the write set was generated. However, if the search is targeting the corresponding row (row numbers 2, 4 and 7 in this example), they cannot be used as the search target since these row numbers have already been deleted. In order to deal with this situation, the following processes are executed when search processing is executed in the lower-level master node.

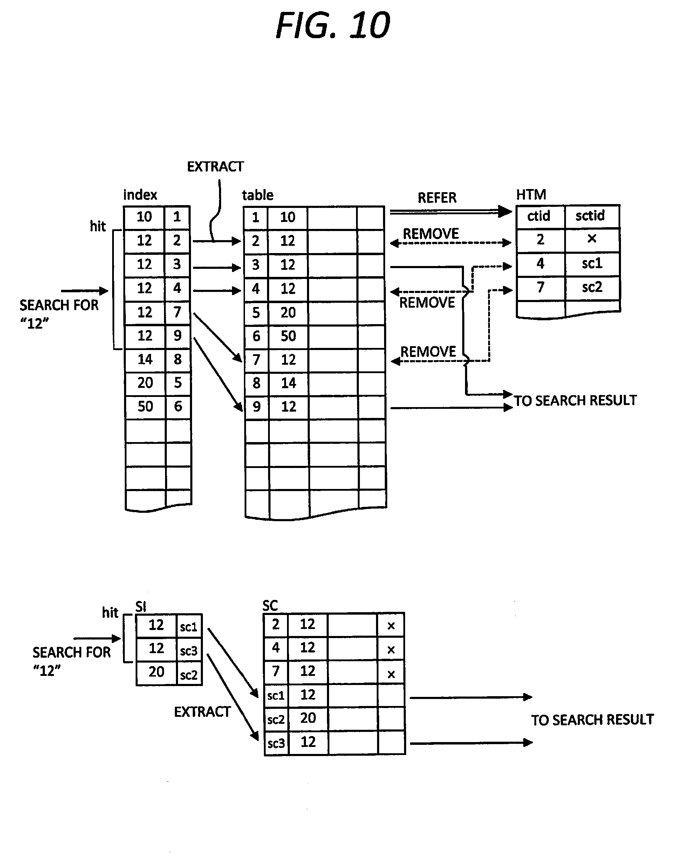

FIG. 10 illustrates the case where a search is executed on the database of the lower-level master node at the stage where the write set is being generated by the lower-level master node. For example, let it be assumed that this search processing searches for the tuples corresponding to the A field value of "12," as shown in FIG. 10.

In this case, first, the database processing unit (11b) refers to the index (11e) of the master database (11a) to extract a search target row (tuple) of the master database (11a). In the example shown in FIG. 10, five entries have matched in the index (11e), resulting in extracting the tuples associated with row numbers 2, 3, 4, 7 and 9 in the master database (11a).

The database processing unit (11b) then refers the heap tuple mat (HTM) of the write set, on a row-by-row basis, to check whether the row numbers corresponding to the rows extracted in the master database (11a) are entered or not. When the row numbers are not entered, the database processing unit (11b) includes the extracted corresponding rows in the search result, but when the row numbers are entered, the database processing unit (11b) removes the extracted corresponding rows from the search result. In the example shown in FIG. 10, because the entries associated with the row numbers 2, 4 and 7 exist in the heap tuple map (HTM), the tuples associated with the row numbers 2, 4 and 7 are removed from the search result. However, because the entries associated with the row numbers 3 and 9 do not exist in the heap tuple map (HTM), the tuples associated with the row numbers 3 and 9 are included in the search result.

Although not registered in the master database (11a), in some cases a search target entry (the value shown in the A field is "12" in this example) is registered in the shadow copy when the update instruction for updating the master database (11a) is received. In order to deal with this situation, the database processing unit (11b) refers to the shadow index (SI) included in the write set, to extract the search target entry of the shadow copy (SC). The database processing unit (11b) then includes the extracted entry in the search result. In the example shown in FIG. 10, the entries associated with row numbers sc1 and sc3 in the shadow copy (SC) are extracted as the search results. In other words, in this example, the tuples corresponding to row numbers 3 and 9 are extracted as the search results from the master database (11a), and the entries associated with row numbers sc1 and sc3 are extracted as the search results from the shadow copy (SC).

<When contention occurs while update of the lower-level master node is being performed with the transaction log from the higher-level master node>

When an instruction for updating the database of the lower-level master node is being executed to the corresponding row while replication is being performed on the database of the lower-level master node based on the transaction log distributed from the higher-level master node, contention will occur.

Specifically, a corresponding case would be when a transaction log including an entry of row number 4 is distributed from the higher-level master node while row numbers 2,4 and 7 are being updated based on the update instruction to the lower-level master node.

In the foregoing case, even if the write set created in the lower-level master node is sent to the higher-level master node, since the transaction log relating to the corresponding row has already been distributed to the higher-level master node, the write set is aborted since contention with the higher-level master node is detected. Accordingly, contention in that lower-level master node may be ignored.

Meanwhile, as another method of resolving the contention in the lower-level master nodes, when a write set (heap tuple map (HTM), shadow copy (SC) and shadow index (SI)) is created in a lower-level master node, these may be registered in a backend memory (BEM) of that lower-level master node so that these areas can be referred to from two or more processes (specifically, the replication process and the write set generation process). In other words, in the lower-level master node, desirably the write set, and more specifically only the heap tuple map, is stored in the shared memory.

In the foregoing case, as a result of referring to the write set in the backend memory (BEM) upon the lower-level master node executing the replication of the master database (11a), the write set that contradicts the update instruction can be aborted at the stage of the lower-level master node. Specifically, the transaction log processing unit (11c) refers to the backend memory (BEM), and aborts the transaction that is generating the heap tuple map (HTM) when the corresponding row to be updated based on the update instruction is contained in that heap tuple map (HTM).

Accordingly, by storing the heap tuple map (HTM) in a shared memory and enabling the referral thereof from a plurality of processes, contention can be prevented at the stage of the lower-level master node even in a multi master system database. In addition, since only the heap tuple map (HTM) needs to be stored in the shared memory, it will not occupy the valuable shared memory.

## Claims

1. A method of managing a database which hierarchically includes higher-level and lower-level master nodes in which records can be updated,
the higher-level and lower-level master nodes each having a database and an index for searching the database,
the method comprising:
when an update instruction for updating the database is issued in any of the lower-level master nodes, generating, by a database processing unit of the lower-level master node, a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node;
comparing, by a database processing unit of the higher-level master node, the heap tuple map of the write set received from the lower-level master node with the database of the higher-level master node, and verifying whether a corresponding row of the database that is registered as a target has been updated by a different write set;
aborting, by the database processing unit of the higher-level master node, the write set when the update has been performed, and when the update has not been performed, updating the database of the higher-level master node and the index of the database by using the shadow copy and the shadow index, and generating, by a transaction log processing unit of the higher-level master node, a record of this update as a transaction log;
distributing, by the higher-level master node, the transaction log to the lower-level master nodes including the lower-level master node which has sent the write set; and
updating, by a transaction log processing unit of the lower-level master node, the database of the lower-level master node and the index of the database based on the received transaction log.

2. The method of managing a database according to claim 1, wherein the shadow copy of the write set in the lower-level master node is configured only from newly added rows.

3. The method of managing a database according to claim 1 or 2, wherein
the transaction log processing unit of the higher-level master node generates a transaction log that only shows the record of the update associated with the database, and
the transaction log processing unit of the lower-level master node specifies updated contents of the index from the record of the update of the database that is shown by the received transaction log, and updates the index of the lower-level master node based on the specified updated contents.

4. The method of managing a database according to any one of claims 1 to 3, wherein
referring, by the database processing unit of the lower-level master node, to the index of the database to extract a corresponding row of the database that is a target of the search processing;
referring to the heap tuple map included in the write set, on a row-by-row basis, to determine whether a row number of the extracted corresponding row is entered or not, including the extracted corresponding row in a search result when the row number is not entered, and removing the extracted corresponding row from the search result when the row number is entered; and
referring to the shadow index included in the write set, extracting an entry of a shadow copy as a target of the search processing, and including the extracted entry in the search result,
are executed , in a stage where the write set is being generated by the lower-level master node, when search processing is executed on the database of the lower-level master node.

5. The method of managing a database according to any one of claims 1 to 4, wherein
when the write set is generated in the lower-level master node, an area of a backend memory in the lower-level master node for registering the write set can be referred to at least by the transaction log processing unit of the lower-level master node which executes an update instruction based on the transaction log distributed from the higher-level master node, and
when the transaction log processing unit of the lower-level master node refers to the backend memory and a corresponding row to be updated based on the update instruction is contained in the heap tuple map of the write set, the transaction log processing unit aborts the transaction that is generating this heap tuple map.

6. A method of managing a database of a higher-level master node in a database hierarchically including the higher-level master node and a lower-level master node in which records can be updated,
the higher-level and lower-level master nodes each having a database and an index for searching the database,
the method comprising:
receiving a write set which is generated when an update instruction for updating the database is issued in any of the lower-level master nodes and which is generated by a database processing unit of the lower-level master node, the write set including shadow copy expanded in a memory of the lower-level master node and showing updated contents of the database resulted by the update instruction, a heap tuple map showing a row that is a target of the update instruction, and a shadow index showing contents to be added in the index when the database is updated;
comparing, by a database processing unit of the higher-level master node, the heap tuple map of the write set received from the lower-level master node with the database of the higher-level master node, and verifying whether a corresponding row of the database that is registered as a target has been updated by a different write set; and
aborting, by the database processing unit of the higher-level master node, the write set when the update has been performed, and when the update has not been performed, updating the database of the higher-level master node and the index of the database by using the shadow copy and the shadow index.

7. The method of managing a database of a higher-level master node according to claim 6, wherein the higher-level master node receives the write set that includes a shadow copy configured only from newly added rows.

8. A method of managing a database of a lower-level master node in a database hierarchically including a higher-level master node and the lower-level master node in which records can be updated,
the higher-level and lower-level master nodes each having a database and an index for searching the database,
the method comprising:
when an update instruction for updating the database is issued in any of the lower-level master nodes, generating, by a database processing unit of the lower-level master node, a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node in order to cause the higher-level master node to compare the heap tuple map of the write set received from the lower-level master node with the database of the higher-level master node, verify whether a corresponding row of the database that is registered as a target has been updated by a different write set, abort the write set when the update has been performed, and when the update has not been performed, update the database of the higher-level master node and the index of the database by using the shadow copy and the shadow index, generate a record of this update as a transaction log, and distribute the transaction log to the lower-level master nodes including the lower-level master node which has sent the write set; and
updating, by a transaction log processing unit of the lower-level master node upon reception of the transaction log, the database of the lower-level master node and the index of the database based on the received transaction log.

9. The method of managing a database of a lower-level master node according to claim 8, wherein the shadow copy of the write set in the lower-level master node is configured only from newly added rows.

10. The method of managing a database of a lower-level master node according to claim 8 or 9, wherein
a transaction log that only shows the record of the update associated with the database is generated in the higher-level master node, and
the transaction log processing unit of the lower-level master node specifies updated contents of the index from the record of the update of the database that is shown by the received transaction log, and updates the index of the lower-level master node based on the specified updated contents.

11. The method of managing a database of a lower-level master node according to any one of claims 8 to 10, wherein, in a stage where the write set is being generated by the lower-level master node, when search processing is executed on the database of the lower-level master node, the method executes:
referring, by the database processing unit of the lower-level master node, to the index of the database to extract a corresponding row of the database that is a target of the search processing;
referring to the heap tuple map included in the write set, on a row-by-row basis, to determine whether a row number of the extracted corresponding row is entered or not, including the extracted corresponding row in a search result when the row number is not entered, and removing the extracted corresponding row from the search result when the row number is entered; and
referring to the shadow index included in the write set, extracting an entry of a shadow copy as a target of the search processing, and including the extracted entry in the search result.

12. The method of managing a database of a lower-level master node according to any one of claims 8 to 11, wherein
when the write set is generated in the lower-level master node, an area of a backend memory in the lower-level master node for registering the write set can be referred to at least by the transaction log processing unit of the lower-level master node which executes an update instruction based on the transaction log distributed from the higher-level master node, and
when the transaction log processing unit of the lower-level master node refers to the backend memory and a corresponding row to be updated based on the update instruction is contained in the heap tuple map of the write set, the transaction log processing unit aborts the transaction that is generating this heap tuple map.

13. A database system which hierarchically includes higher-level and lower-level master nodes in which records can be updated,
the higher-level and lower-level master nodes each having a database and an index for searching the database,
the database system comprising:
means for, when an update instruction for updating the database is issued in any of the lower-level master nodes, generating in the lower-level master node where the update instruction is generated a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node;
means for, in the higher-level master node, comparing the heap tuple map of the write set received from the lower-level master node with the database of the higher-level master node and verifying whether a corresponding row of the database that is registered as a target has been updated by a different write set;
means for, in the higher-level master node, aborting the write set when the update has been performed, and when the update has not been performed, updating the database of the higher-level master node and the index of the database by using the shadow copy and the shadow index, and generating a record of this update as a transaction log;
means for, in the higher-level master node, distributing the transaction log to the lower-level master nodes including the lower-level master node which has sent the write set; and
means for, in the lower-level master node, updating the database of the lower-level master node and the index of the database based on the received transaction log.

14. A program for causing a higher-level master node of a database hierarchically including the higher-level master node and a lower-level master node which each have a database and an index for searching the database and in which records can be updated, to execute the steps of:
receiving a write set which is generated when an update instruction for updating the database is issued in any of the lower-level master nodes and which is generated by a database processing unit of the lower-level master node, the write set including shadow copy expanded in a memory of the lower-level master node and showing updated contents of the database resulted by the update instruction, a heap tuple map showing a row that is a target of the update instruction, and a shadow index showing contents to be added in the index when the database is updated;
comparing the heap tuple map of the write set received from the lower-level master node with the database of the higher-level master node, and verifying whether a corresponding row of the database that is registered as a target has been updated by a different write set; and
aborting the write set when the update has been performed, and when the update has not been performed, updating the database of the higher-level master node and the index of the database by using the shadow copy and the shadow index.

15. A program for causing a lower-level master node of a database hierarchically including a higher-level master node and the lower-level master node which each have a database and an index for searching the database and in which records can be updated, to execute the steps of:
when an update instruction for updating the database is issued in any of the lower-level master nodes, generating a write set that includes a shadow copy expanded in a memory of the lower-level master node and showing updated contents of the database resulted by the update instruction, a heap tuple map showing a row that is a target of the update instruction, and a shadow index showing contents to be added in the index when the database is updated, and sending the generated write set to a higher-level master node in order to cause the higher-level master node to compare the heap tuple map of the write set received from the lower-level master node with the database of the higher-level master node, verify whether a corresponding row of the database that is registered as a target has been updated by a different write set, abort the write set when the update has been performed, and when the update has not been performed, update the database of the higher-level master node and the index of the database by using the shadow copy and the shadow index, generate a record of this update as a transaction log, and distribute the transaction log to the lower-level master nodes including the lower-level master node which has sent the write set; and
updating, upon reception of the transaction log, the database of the lower-level master node and the index of the database based on the received transaction log.
